(19) **Europäisches Patentamt**
**European Patent Office**
**Office européen des brevets**

(11) Veröffentlichungsnummer : **0 170 819
B1**

(12) **EUROPÄISCHE PATENTSCHRIFT**

(45) Veröffentlichungstag der Patentschrift :
**26.04.89**

(21) Anmeldenummer : **85107030.0**

(22) Anmeldetag : **07.06.85**

(51) Int. Cl.⁴ : **B 29 C 67/18**, B 29 C 63/00 //
**B29L31:00, B29K105:08**

(54) **Verfahren zum Herstellen von Aussenhautteilen für Fahrzeuge sowie nach dem Verfahren hergestelltes Aussenhautteil.**

(30) Priorität : **31.07.84 DE 3428128**

(43) Veröffentlichungstag der Anmeldung :
**12.02.86 Patentblatt 86/07**

(45) Bekanntmachung des Hinweises auf die Patenterteilung : **26.04.89 Patentblatt 89/17**

(84) Benannte Vertragsstaaten :
**DE FR GB IT SE**

(56) Entgegenhaltungen :
**AT--B-- 308 380
DE--A-- 2 804 067
DE--A-- 3 011 336**

(73) Patentinhaber : **AUDI AG
Postfach 220
D-8070 Ingolstadt (DE)**

(72) Erfinder : **Rossié, Egbert
Elias-Holl-Strasse 16
D-8070 Ingolsgtadt (DE)**
Erfinder : **Heiss, Josef, Dipl.-Ing. (FH)
D-8831 Biesenhard 15 (DE)**

(74) Vertreter : **Engelhardt, Harald
Audi AG Postfach 2 20
D-8070 Ingolstadt (DE)**

## Beschreibung

Die Erfindung bezieht sich auf ein Verfahren zum Herstellen eines Karosserie-Außenhautteiles gemäß dem Oberbegriff des Patentanspruchs 1.

Aus der DE-A-3 011 336 ist ein Verfahren zum Herstellen eines KarosserieAußenhautteiles bekannt, bei dem zur Erzielung einer verbesserten Oberflächenqualität die zur sichtbaren Seite hin zeigenden. Flächen des Karosserie-Außenhautteiles mit einem 0,1 bis 1,0 mm starken Blech überzogen werden. Die Verbindung zwischen dem Faserverbundwerkstoff und dem Blech kann beispielsweise dadurch erfolgen, daß ein geformtes Blech mit einem vorgefertigten, aus Faserverbundwerkstoff hergestellten Teil durch Klebung verbunden wird. Alternativ wird vorgeschlagen, das geformte Blech mit dem Faserverbundwerkstoff während des Preßvorgangs für den Faserverbundwerkstoff zu verbinden.

Der Erfindung liegt die Aufgabe zugrunde, ein Verfahren anzugeben, durch welches sich in kostengünstiger Weise das dünnwandige Blech mit dem Faserverbundwerkstoff zur Bildung eines Karosserie-Außenhautteiles verbinden lassen.

Die Aufgabe wird durch die kennzeichnenden Merkmale des Patentanspruchs 1 gelöst.

Durch den Einsatz von zwei verschieden großen Stempeln in der gleichen Vorrichtung kann das Blech in die gewünschte Form gepreßt werden und darüber hinaus auch das die Innenkontur bildende Glasfaservlies geformt und mit dem Blech verbunden werden. Alle drei Arbeitsgänge zur Erzeugung des Karosserie-Außenhautteiles können also in einer Vorrichtung durchgeführt werden und ohne daß das Blech der Vorrichtung entnommen werden müßte. Es bleibt dort in der Matrize, bis es durch das Glasfaservlies verstärkt ist. Ein Verbleiben des Bleches in der Matrize ist deshalb bedeutsam, da für das Karosserie-Außenhautteil sehr dünne Bleche (bis etwa 0,5 mm) Werwendung finden sollen. Das Handling dieser dünnen Bleche ist äußerst problematisch und führt leicht zu deren Beschädigung. Für den gewünschten Zweck sind die dünnen Bleche jedoch ausreichend, da die Festigkeit des Karosserie-Außenhautteiles durch den Faserverbundwerkstoff gegeben ist.

Die Ansprüche 2 und 3 haben Maßnahmen zum Gegenstand, durch welche die Verbindung zwischen dem Blech und dem Faserverbundwerkstoff verbessert wird.

Vorteilhaft ist, wenn beim Pressen des harzgetränkten Glasfaservlieses Rippen, Aufnahmen oder ähnliches mit angeformt werden und so die Vorteile des Kunststoffes voll zum Tragen kommen.

Zweckmäßig ist es auch, wenn beim Pressen des Glasfaservlieses Verstärkungen aus Blech, Inserts (z. B. Muttern) oder ähnliche Bauteile gleich mit eingeformt werden, so daß sich deren separate Befestigung erübrigt.

Als günstig hat es sich erwiesen, wenn für das Blechformteil Stahl- oder Aluminiumblech in einer Stärke bis etwa 0,3 mm verwendet wird. Der Korrosionsschutz kann dabei durch verzinkte bzw. anderweitig beschichtete Bleche erreicht werden. Durch den Auftrag einer haftungserhöhenden Schicht (Primer) auf der dem Faserverbundwerkstoff zugewandten Seite des Karosserie-Außenhautteiles wird der Korrosionsschutz weiter erhöht.

## Patentansprüche

1. Verfahren zum Herstellen eines Karosserie-Außenhautteiles, welches aus Faserverbundwerkstoff besteht und an seiner Sichtseite mit einem dünnwandigen Blech überzogen ist, wobei das dünnwandige, bereits geformte Blech während des Preß vorganges für den Faserverbundwerkstoff mit diesem verbunden wird, gekennzeichnet durch folgende Verfahrensschritte :

a) das Blech wird in einer Matrize durch einen Stempel zu einem die Außenkontur des Karosserie-Außenhautteiles bildenden Blechformteil gepreßt,

b) auf das geformte, in der Matrize befindliche Blechformteil wird in teigigem Zustand ein harzgetränktes Glasfaservlies aufgelegt und anschließend

c) das harzgetränkte Glasfaservlies unter Verwendung eines gegenüber dem ersteingesetzten Stempel kleineren Stempels formgepreßt, wodurch die Innenkontur des Karosserie-Außenhautteiles und die Verbindung mit dem Blechformteil erzeugt wird.

2. Verfahren nach Anspruch 1, dadurch gekennzeichnet, daß das Verpressen des harzgetränkten Glasfaservlieses unter Wärmezufuhr erfolgt.

3. Verfahren nach Anspruch 1 oder 2, dadurch gekennzeichnet, daß auf der Innenseite der Blechplatine bzw. dem Blechformteil eine haftungserhöhende Schicht aufgetragen wird.

4. Verfahren nach einem der Ansprüche 1 bis 3, dadurch gekennzeichnet daß gleichzeitig beim Pressen des Glasfaservlieses Rippen, Aufnahmen oder ähnliches mit angeformt werden.

5. Verfahren nach einem der Ansprüche 1 bis 4, dadurch gekennzeichnet, daß beim Pressen des Glasfaservlieses Blechverstärkungen, Inserts (z. B. Muttern) oder ähnliches mit eingeformt werden.

## Claims

1. Process for manufacturing a vehicle body shell component which consists of fibre composite and is covered on its visible side with a thin-walled metal sheet, in which the thin-walled, already moulded, metal sheet is bonded with the fibre composite during the pressing process for the same, characterized by the following process stages :

a) the sheet metal is pressed in a bottom die by an upper die to a sheet metal shaped component forming the outer contour of the vehicle body shell component,

b) a resin-impregnated glass-fibre mat in a pasty state is placed on the moulded, sheet metal shaped component which is in the bottom die, and then

c) the resin-impregnated glass-fibre mat is compression-moulded using an upper die which is smaller than the first-used upper die, thereby producing the internal contour of the vehicle body shell component and the bond with the sheet metal shaped component.

2. Process according to Claim 1, characterized in that the pressing of the resin-impregnated glass-fibre mat takes place with the addition of heat.

3. Process according to Claim 1 or 2, characterized in that an adhesion-promoting layer is applied to the inner side of the sheet steel billet or to the sheet metal shaped component.

4. Process according to one of Claims 1 to 3, characterized in that during the pressing of the glassfibre mat, ribs, recesses or the like are moulded at the same time.

5. Process according to one of Claims 1 to 4, characterized in that sheet metal reinforcing pieces, inserts (for example, nuts) or the like are moulded in during the pressing of the glass-fibre mat.

**Revendications**

1. Procédé de fabrication d'un élément d'habillage de carrosserie se composant d'un matériau composite renforcé par des fibres et recouvert sur sa face visible d'une tôle mince, la tôle mince déjà formée étant reliée à cet élément pendant le procédé de pressage du matériau composite renforcé par des fibres, procédé caractérisé par les étapes suivantes :

a) la tôle est pressée dans une matrice par un poinçon, en une pièce façonnée formant le contour extérieur de l'élément d'habillage de la carrosserie,

b) un mat de fibres de verre imprégné de résine est appliqué à l'état pâteux sur la pièce façonnée se trouvant dans la matrice, et immédiatement après,

c) le mat de fibres de verre imprégné de résine est moulé par pressage en utilisant un poinçon plus petit que celui utilisé en premier lieu, d'où il résulte que le contour intérieur de l'élément d'habillage de carrosserie et sa liaison avec la pièce façonnée sont réalisés.

2. Procédé selon la revendication 1, caractérisé en ce que le pressage du mat de fibres de verre imprégné de résine s'effectue sous apport de chaleur.

3. Procédé selon la revendication 1 ou 2, caractérisé en ce qu'une couche augmentant l'adhérence est appliquée sur le côté intérieur de la préforme en tôle, ou de la pièce façonnée.

4. Procédé selon l'une des revendications 1 à 3, caractérisé en ce que des nervures, des logements, ou similaires, sont simultanément formés lors du pressage du mat de fibres de verre.

5. Procédé selon l'une des revendications 1 à 4, caractérisé en ce que des renforts de tôle, des inserts (par exemple des écrous), ou similaires, sont encastrés intérieurement lors du pressage du mat de fibres de verre.